# EUROPÄISCHE PATENTSCHRIFT

(11) **EP 3 218 222 B1**
(45) Veröffentlichungstag und Bekanntmachung des Hinweises auf die Patenterteilung: **18.07.2018**
(21) Anmeldenummer: 15791316.1
(22) Anmeldetag: 10.11.2015
(51) Int. Cl.: B60N 2/20, B60N 2/22, B60N 2/02

(54) **FAHRZEUGSITZ MIT EINEM ANTRIEBSSYSTEM FÜR EINE NEIGUNGSEINSTELLUNG UND VERFAHREN ZUM BETRIEB EINES ANTRIEBSSYSTEMS**
VEHICLE SEAT WITH A DRIVE SYSTEM FOR A TILT ADJUSTMENT AND METHOD FOR OPERATING A DRIVE SYSTEM
SIÈGE DE VÉHICULE AVEC UN SYSTÈME D'ENTRAÎNEMENT POUR DISPOSITIF DE RÉGLAGE D'INCLINAISON ET PROCÉDÉ POUR FAIRE FONCTIONNER UN SYSTÈME D'ENTRAÎNEMENT

(30) Priorität: 14.11.2014 DE 102014223260; 20.01.2015 DE 102015200816
(43) Veröffentlichungstag der Anmeldung: 20.09.2017
(73) Patentinhaber: Adient Luxembourg Holding S.à r.l., 1855 Luxembourg (LU)
(72) Erfinder: HEEG, Norbert, 66994 Dahn (DE); KIRCH, Eckhard, 66851 Bann (DE)
(74) Vertreter: Liedhegener, Ralf
(86) Internationale Anmeldenummer: PCT/EP2015/076196
(87) Internationale Veröffentlichungsnummer: WO 2016/075133

(56) Entgegenhaltungen:
- EP-A2- 2 565 070
- DE-A1-102005 052 201
- US-A1- 2009 096 270

## Beschreibung

Die Erfindung betrifft einen Fahrzeugsitz mit einer Rückenlehne und einem Antriebssystem für eine Neigungseinstellung einer zwischen einer zur Fahrgastbeförderung geeigneten Gebrauchsstellung und einer gegenüber der Gebrauchsstellung vorgeschwenkten Nichtgebrauchsstellung klappbaren Rückenlehne des Fahrzeugsitzes mit den Merkmalen des Oberbegriffs des Anspruchs 1 und ein Verfahren zum Betrieb eines Antriebssystems.

### Stand der Technik

Bei Kraftfahrzeugsitzen lässt sich üblicherweise die Rückenlehne möglichst feinstufig innerhalb eines vorgegebenen Winkelbereichs in unterschiedlichen Winkelpositionen einstellen, diese Einstellung bezeichnet man als Lehnenneigungseinstellung. Bei Kraftfahrzeugen mit nur einer Tür pro Fahrzeugseite und mit Fondsitzen oder bei Fahrzeugen mit einer dritten Sitzreihe wird der Einstieg in einen Fondsitz dadurch erleichtert, dass man die Rückenlehne des Vordersitzes rasch nach vorne klappen kann. Ein nach vorne klappen der Rückenlehne eines Fondsitzes ist ferner zum Bereitstellen eines vergrößerten, möglichst ebenen Ladebodens gewünscht.
Ein Problem bei derartigen Verstelleinrichtungen ist, dass sie häufig an Orten mit geringem Einbauraum eingebaut werden müssen. Häufig sind Funktionshebel zugleich konstruktionsbedingt versteckt bzw. dem Benutzer nur schwer zugänglich angeordnet. Hinzu kommt, dass bei herkömmlichen Verstelleinrichtungen eine manuelle Neigungsverstellung der Lehne meist aufwändig und umständlich für den Benutzer ist.

Ein Fahrzeugsitz mit einer gattungsgemäßen Verstelleinrichtung ist beispielsweise aus der DE 10 2005 052 201 A1 bekannt. Der Fahrzeugsitz weist einen Sitzrahmen und eine gegenüber dem Sitzrahmen schwenk- und klappbare Rückenlehne auf, wobei die Rückenlehne in ihrer verriegelten Gebrauchslage innerhalb eines Komfortbereichs in mehreren Komfortpositionen motorisch neigungsverstellbar ist, und die Rückenlehne (4) nach Entriegelung zwischen der aufrechten Gebrauchslage und einer vorgeklappten Cargo-Position mit im Wesentlichen horizontaler Stellung der Rückenlehne motorisch klappbar ist. Weiter ist ein motorischer Antrieb in der Rückenlehne vorgesehen, wobei eine erste lehnenfeste elektromotorische Verstelleinrichtung zur Neigungsverstellung der Rückenlehne und eine von der ersten Verstelleinrichtung verschiedene zweite lehnenfeste elektromotorische Verstelleinrichtung zur Klappung der Rückenlehne vorgesehen ist. Für die Schwenkbewegung der Neigungsverstellung und die Klappbewegung der Lehnenklappung ist eine gemeinsame Lehnen-Schwenkachse vorgesehen, wobei die Antriebsachsen der ersten und zweiten elektromotorischen Verstelleinrichtung unterschiedlich sind und ein Übertragungsmittel vorgesehen ist.

Aus der US 2011 / 0 095 584 A1 ist eine Sitzvorrichtung mit einem Rotationsübertragungsmechanismus bekannt, der die Übertragung der Rotation zu einem jeden einer Mehrzahl an Einstellmechanismen vorsieht. Dieser Drehübertragungsmechanismus umfasst einen Motor, eine Schnecke, und zwei jeweils mit der Schnecke kämmende und in der Nähe zueinander angeordnete Schneckenräder. Dieser Drehübertragungsmechanismus enthält vier Kupplungsglieder, dessen Kupplungselemente entsprechend zwischen den Stelleinrichtungen und den Schneckenrädern angeordnet sind. Jedes Kupplungselement ist derart ausgebildet, dass sie zwischen einem Übertragungszustand und einem Unterbrechungszustand umschaltbar sind.

Aus der DE 10 2007 061 902 B3 ist ein Getriebesatz für eine Fahrzeugsitz-Verstelleinrichtung bekannt, wobei der Getriebesatz ein durch eine Motorwelle eines Elektromotors antreibbares Antriebsritzel und ein Abtriebszahnrad aufweist. Ebenso ist vorgesehen, dass eine Zwischenzahnrad-Einheit mit einem ersten Zwischenzahnrad vorgesehen ist, das mit dem Abtriebszahnrad in Eingriff ist, wobei das Antriebsritzel in axialer Richtung der Motorwelle verstellbar ist zwischen einer ersten Stellung, in der es mit der Zwischenzahnrad-Einheit in Eingriff ist, und einer zweiten Stellung, in der es direkt mit dem Abtriebszahnrad in Eingriff ist, wobei das Abtriebszahnrad in der ersten und zweiten Stellung mit verschiedenen Untersetzungsverhältnissen von der Motorwelle angetrieben ist.
Weitere gattungsgemäße Fahrzeugsitze sind beispielsweise aus der DE 103 56 614 A1 und der DE 10 2012 008 533 B4 bekannt.

### Aufgabe

Der Erfindung liegt die Aufgabe zu Grunde, ein Antriebssystem für einen eingangs beschriebenen Fahrzeugsitz zu verbessern, sowie einen entsprechenden Fahrzeugsitz bereitzustellen.
Eine weitere Aufgabe der Erfindung ist es, ein Verfahren zum Betrieb eines solchen Antriebssystems bereitzustellen.

### Lösung

Diese Aufgabe wird erfindungsgemäß durch einen Fahrzeugsitz mit einer Rückenlehne und einem Antriebssystem mit den Merkmalen des Anspruches 1 gelöst. Die weitere Aufgabe wird durch ein Verfahren zum Betrieb eines Antriebssystems mit den Merkmalen des Anspruchs 13 gelöst.

Bei dem erfindungsgemäßen Fahrzeugsitz mit einem Antriebssystem für eine Neigungseinstellung einer zwischen einer zur Fahrgastbeförderung geeigneten Gebrauchsstellung und einer gegenüber der Gebrauchsstellung vorgeschwenkten Nichtgebrauchsstellung klappbaren Rückenlehne eines Fahrzeugsitzes, insbesondere eines Fahrzeugfondsitzes, ist die Rückenlehne über wenigstens einen Beschlag an einem Unterbau des Fahrzeugsitzes gehalten. Lehnenseitig ist ein von einem Antriebsmotor antreibbares Abtriebsritzel vorgesehen, wobei das Abtriebsritzel mit einem drehfest am Unterbau angeordneten Zahnsegment zusammenwirkt. Ferner ist es vorgesehen, dass das Abtriebsritzel mittels einer Kupplung von dem Antriebsmotor entkoppelbar ist, wobei mittels des Antriebsmotors eine Schwenkbewegung der Lehne durchführbar ist, während die Rückenlehne im Beschlag freigestellt ist.

Die zur Fahrgastbeförderung geeignete Gebrauchsstellung der Rückenlehne beschreibt im Sinne der Erfindung hierbei allgemein eine Vielzahl möglicher Designstellungen der Rückenlehne mit unterschiedlichen Neigungswinkeln relativ zu einer Vertikalrichtung. Im Wesentlichen weist eine Gebrauchsstellung, in Blickrichtung eines im Fahrzeugsitz sitzenden Insassen in normaler Sitzposition betrachtet, einen nach hinten geneigten Winkel im Bereich von 0° bis 30°, bevorzugt im Bereich von 10° bis 25°, relativ zur Vertikalrichtung auf. Unter einer hintersten Gebrauchsstellung ist nachfolgend eine in Blickrichtung des Insassen betrachtet am stärksten nach hinten geneigte Gebrauchsstellung bezeichnet, welche zudem den größten Winkel relativ zur Vertikalrichtung aufweist. Entsprechend ist unter einer vordersten Gebrauchsstellung die Stellung mit dem geringsten Winkel relativ zur Vertikalrichtung bezeichnet.

Durch die Entkopplung des Abtriebsritzels von dem Antriebsmotor wird es vorteilhaft ermöglicht, das Antriebssystem durch eine Unterbrechung des Kraftflusses zwischen Antriebsmotor und Abtriebsritzel von einer Bewegung der Rückenlehne zu entkoppeln. Dies ermöglicht auch bei Rückenlehnen mit dem erfindungsgemäßen Antriebssystem weiterhin eine Möglichkeit einer manuellen Neigungseinstellung der Rückenlehne, wie sie bekanntermaßen bei bisherigen Rückenlehnen Anwendung findet.

Dadurch, dass mittels des Antriebsmotors eine Schwenkbewegung der Lehne durchführbar ist, wird der Vorteil erreicht, dass ein besonders kompaktes Antriebssystem bereitgestellt wird, welches in Rückenlehnen von Fahrzeugsitzen einbaubar ist. Ebenso ist es auch möglich, das Antriebssystem in bestehenden Rückenlehnen nachzurüsten, sofern der Beschlag der Rückenlehne verriegelbar und entriegelbar ist.

Weitere vorteilhafte Ausgestaltungen des Fahrzeugsitzes, welche einzeln oder in Kombination miteinander eingesetzt werden können, sind Gegenstand der Unteransprüche.

Gemäß einer ersten beispielhaften Ausgestaltung des Fahrzeugsitzes, ist die Neigungseinstellung mittels des Beschlags fixierbar. Der Beschlag kann hierzu einen verriegelten und einen entriegelten Zustand einnehmen. Hierdurch wird es ermöglicht, zusätzlich zu der Betätigung mittels des Antriebssystems, eine manuelle Einstellung über eine im Beschlag vorgesehene Einstellmöglichkeit vorzusehen. Ferner kann der fixierte Beschlag zur Aufnahme einer im Crashfall wirkenden höheren Belastung ausgestaltet sein, um hierdurch die Sicherheit für die Fahrzeuginsassen in vorteilhafter Weise zu erhöhen.

Gemäß einer weiteren beispielhaften Ausgestaltung des Fahrzeugsitzes ist eine sich an der Rückenlehne und dem Unterbau abstützende Kompensationsfeder vorgesehen, mittels welcher die Rückenlehne in Richtung ihrer vorgeschwenkten Nichtgebrauchsstellung vorgespannt ist. Die Kompensationsfeder wirkt je nach Betriebsart des nachfolgend beschriebenen erfindungsgemäßen Verfahrens einerseits mit dem Antriebssystem zusammen, um diesem eine Gegenkraft zur gezielteren Feineinstellung der Neigung der Rückenlehne zu ermöglichen, und andererseits mit dem Beschlag zusammen, um dessen Fixierung stets in Eingriff zu halten, wenn die Rückenlehne im Beschlag fixiert ist.

Gemäß einer weiteren beispielhaften Ausgestaltung des Fahrzeugsitzes ist zwischen dem Antriebsmotor und dem Abtriebsritzel ein Getriebe angeordnet. Hierdurch wird es ermöglicht, die Motordrehzahl in vorteilhafter Weise auf eine gewünschte Ausgangsdrehzahl des Abtriebsritzels zu untersetzen und/oder ein gewünschtes zu übertragendes Drehmoment einzustellen.

Gemäß einer weiteren beispielhaften Ausgestaltung des Fahrzeugsitzes weist das Antriebssystem einen Aktuator auf, mittels welchem die Kupplung betätigbar ist. Hierbei kann die Kupplung in vorteilhafter Weise durch Einsatz eines Aktuators mit einfachen Mitteln gesteuert werden.

Gemäß einer weiteren beispielhaften Ausgestaltung des Fahrzeugsitzes weist das Antriebssystem eine Entriegelungseinrichtung auf, mittels welcher der Beschlag der Rückenlehne betätigbar, insbesondere verriegelbar und/oder entriegelbar, ist. Von Vorteil ist es hierbei, dass die Entriegelungseinrichtung sowohl von dem Antriebssystem als auch von einer vorgesehenen manuellen Betätigung gesteuert werden kann.

Gemäß einer weiteren beispielhaften Ausgestaltung des Fahrzeugsitzes sind der Aktuator und/oder die Entriegelungseinrichtung elektrisch betätigbar. Mittels des elektrisch betätigbaren Aktuators ist es möglich die Kupplung mit einer gewünschten voreinstellbaren Kraft und/oder zu einem gewünschten Zeitpunkt zu betätigen. Gleichfalls ermöglicht die elektrisch betätigbare Entriegelungseinrichtung eine gezielte Betätigung, insbesondere zu einem gewünschten Zeitpunkt der Entriegelung und/oder Verriegelung, während des nachfolgend beschriebenen erfindungsgemäßen Verfahrens.

Gemäß einer weiteren beispielhaften Ausgestaltung des Fahrzeugsitzes ist der Fahrzeugsitz durch ein Schloss am Fahrzeugboden verriegelbar. Hierbei ist es von Vorteil, dass mittels des Schlosses im Crashfall höhere Kräfte aufgenommen und/oder gehalten werden können.

Gemäß einer weiteren beispielhaften Ausgestaltung des Fahrzeugsitzes ist das Schloss durch eine elektrisch betätigbare Entriegelungseinrichtung entriegelbar. Eine elektrisch betätigbare Entriegelungseinrichtung ermöglicht eine gezielte Betätigung, insbesondere zu einem gewünschten Zeitpunkt der Entriegelung und/oder Verriegelung, während des nachfolgend beschriebenen erfindungsgemäßen Verfahrens.

Gemäß einer weiteren beispielhaften Ausgestaltung des Fahrzeugsitzes ist eine Steuerungseinrichtung vorgesehen, welche den Antriebsmotor und/oder einen Aktuator und/oder eine Entriegelungseinrichtung steuert.
Eine entsprechende Steuerung mittels der Steuerungseinrichtung im Sinne der Erfindung beschreibt allgemein, eine elektrische Aktivierung und/oder Deaktivierung der jeweiligen gesteuerten Komponenten, aber auch eine kontrollierte Beeinflussung des Betriebes dieser Komponenten. Beispielsweise kann die Steuerung zur Einstellung einer gewünschten Drehzahl des Antriebsmotors eingerichtet sein, diesen mittels eines pulsweitenmodulierten Steuersignals zu steuern und/oder zu regeln.
Zur weiteren Regelung und insbesondere zeitlichen Abstimmung der Steuerung verschiedener Komponenten aufeinander, kann es weiter von Vorteil sein, wenn die Steuerungseinrichtung mit einem oder mehreren Sensoren verbunden ist, um Informationen über den Istzustand der jeweiligen Komponenten zu erfassen.
Ein erfindungsgemäßer Fahrzeugsitz, insbesondere Fahrzeugfondsitz, mit einer zwischen einer zur Fahrgastbeförderung geeigneten Gebrauchsstellung und einer gegenüber der Gebrauchsstellung vorgeschwenkten Nichtgebrauchsstellung klappbaren Rückenlehne, weist insbesondere ein Antriebssystem gemäß der vorhergehenden Beschreibung auf. Dementsprechend weist der erfindungsgemäße Fahrzeugsitz dieselben Vorteile auf, wie das vorgenannte Antriebssystem.
Ein erfindungsgemäßes Verfahren zum Betrieb eines Antriebssystems für eine Neigungseinstellung einer zwischen einer zur Fahrgastbeförderung geeigneten Gebrauchsstellung und einer gegenüber der Gebrauchsstellung vorgeschwenkten Nichtgebrauchsstellung klappbaren Rückenlehne eines Fahrzeugsitzes, gemäß der vorhergehenden Beschreibung, zeichnet sich aus durch:
- eine erste Betriebsart, in welcher der Antriebsmotor von der Rückenlehne entkoppelt ist und die Rückenlehne von einer Kompensationsfeder angetrieben in die Nichtgebrauchsstellung bewegt wird;
- eine zweite Betriebsart, in welcher der mit der Rückenlehne gekoppelte Antriebsmotor die Rückenlehne, entgegen einer von der Kompensationsfeder erzeugten Spannkraft, in die Gebrauchsstellung bewegt;
- eine dritte Betriebsart, in welcher der mit der Rückenlehne gekoppelte Antriebsmotor die Rückenlehne, durch kontrolliertes Nachgeben der von der Kompensationsfeder erzeugten Spannkraft, in Richtung der Nichtgebrauchsstellung bewegt.

Die erste Betriebsart dient grundsätzlich dazu die Rückenlehne in Richtung ihrer vorgeschwenkten Nichtgebrauchsstellung zu bewegen. Angetrieben von der Kompensationsfeder wird die Rückenlehne möglichst schnell in eine Nichtgebrauchsstellung bewegt, welche insbesondere zum Bereitstellen eines möglichst ebenen Ladebodens, bevorzugt zur Erweiterung eines in einem Kofferraum eines Kraftfahrzeugs vorgesehenen Ladebodens, dient. Das Verfahren der Rückenlehne in diese Position erfolgt bevorzugt innerhalb weniger Sekunden, bevorzugt weniger als 10 Sekunden, besonders bevorzugt weniger als 6 Sekunden.

Die zweite Betriebsart dient dazu, die Rückenlehne, beispielsweise aus der Nichtgebrauchsstellung heraus, in Richtung der hintersten Gebrauchsstellung zu verfahren, um entweder eine Sitzfläche des Fahrzeugsitzes wieder bereitzustellen oder aber die Neigung der Rückenlehne in Richtung der hintersten Gebrauchsstellung einzustellen. Die Bewegung der Rückenlehne durch den Antriebsmotor erfolgt bevorzugt mit einstellbarer Geschwindigkeit, so dass ausgehend von der Nichtgebrauchsstellung der Rückenlehne einer Wiederaufrichten der Rückenlehne zum Bereitstellen einer zur Fahrgastbeförderung geeigneten Sitzfläche des Fahrzeugsitzes beispielsweise mit einer höheren Geschwindigkeit erfolgen kann, so dass ein derartiger Vorgang insbesondere innerhalb von 15 Sekunden abgeschlossen sein kann. Ebenso kann entsprechend ein komfortmäßiges Einstellen der Neigung der Rückenlehne in Richtung der hintersten Gebrauchsstellung mit entsprechend langsamerer Geschwindigkeit erfolgen, so dass ein solcher Vorgang insbesondere mit einer durchschnittlichen Winkelgeschwindigkeit im Bereich von 3 bis 4 Grad pro Sekunde erfolgen kann, wodurch für ein Abfahren über den maximal möglichen Bereich zwischen der Nichtgebrauchsstellung und der Gebrauchsstellung bis zu 35 Sekunden beansprucht werden können.
Die dritte Betriebsart dient ebenso dazu die Rückenlehne in Richtung einer vordersten Gebrauchsstellung und/oder ihrer Nichtgebrauchsstellung zu bewegen, jedoch in einer kontrollierten, langsameren Geschwindigkeit, insbesondere mit einer durchschnittlichen Winkelgeschwindigkeit im Bereich von 3 bis 4 Grad pro Sekunde, erfolgt.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.
Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1a:: eine Darstellung eines erfindungsgemäßen Fahrzeugsitzes,
- Fig. 1b:: eine vergrößerte Darstellung eines Ausschnittes des Fahrzeugsitzes aus Fig. 1a,
- Fig. 2:: eine schematische Darstellung einer möglichen Ausgestaltung des Antriebssystems eines erfindungsgemäßen Fahrzeugsitzes,
- Fig. 3a:: eine Detailansicht des Antriebssystems aus Fig. 2 in ausgekuppeltem Zustand,
- Fig. 3b:: eine Detailansicht des Antriebssystems aus Fig. 2 in eingekuppeltem Zustand,
- Fig. 4:: ein Flussdiagramm der ersten Betriebsart des erfindungsgemäßen Verfahrens,
- Fig. 5:: ein Flussdiagramm der zweiten Betriebsart des erfindungsgemäßen Verfahrens und
- Fig. 6:: ein Flussdiagramm der dritten Betriebsart des erfindungsgemäßen Verfahrens.

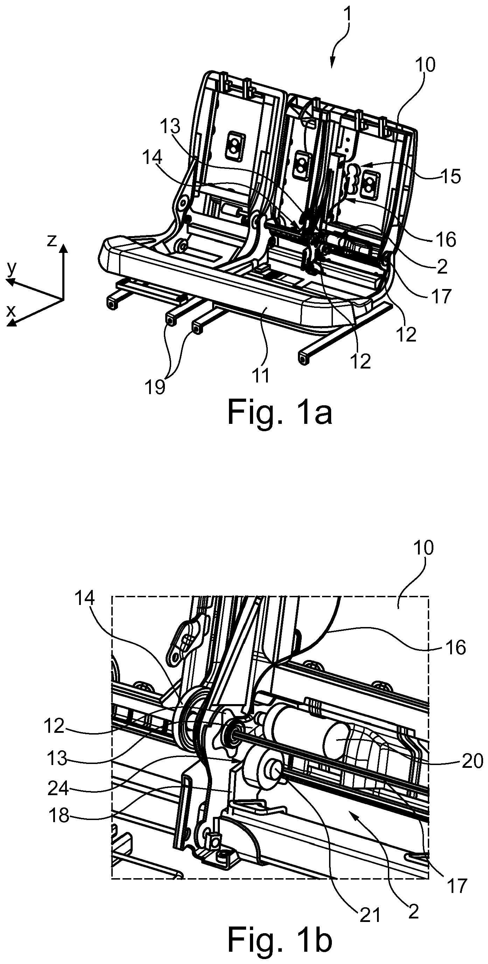

Der in Fig. 1a schematisch dargestellte Fahrzeugsitz wird nachfolgend unter Verwendung von drei senkrecht zueinander verlaufenden Raumrichtungen beschrieben. Eine Längsrichtung x verläuft bei einem im Fahrzeug eingebauten Fahrzeugsitz weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz sitzenden Insassen in normaler Sitzposition, wobei der Fahrzeugsitz im Fahrzeug eingebaut, in einer zur Personenbeförderung geeigneten Gebrauchsposition mit aufrecht stehender Sitzlehne und wie üblich in Fahrtrichtung ausgerichtet ist. Der erfindungsgemäße Fahrzeugsitz kann jedoch auch in abweichender Ausrichtung, beispielsweise quer zur Fahrtrichtung verbaut werden.

In Fig. 1a ist eine Darstellung eines erfindungsgemäßen Fahrzeugsitzes 1 gezeigt, wohingegen Fig. 1b eine vergrößerte Darstellung eines Ausschnittes des Fahrzeugsitzes aus Fig. 1a zeigt. Aufgrund der hohen Gemeinsamkeiten der beiden Darstellungen werden die Figuren 1a und 1b nachfolgend gemeinsam beschrieben.

Fig. 1a ist zu entnehmen, dass ein Fahrzeugsitz 1, insbesondere ein Fahrzeugfondsitz, eine zwischen einer zur Fahrgastbeförderung geeigneten Gebrauchsstellung und einer gegenüber der Gebrauchsstellung vorgeschwenkten Nichtgebrauchsstellung klappbare Rückenlehne 10, aufweist. Die Rückenlehne 10 weist ein Antriebssystem 2 auf. Der Fahrzeugsitz 1 ist hierbei bevorzugt durch ein aus darstellungstechnischen Gründen nicht dargestelltes Schloss am Fahrzeugboden verriegelt, wobei das Schloss ferner bevorzugt durch eine elektrisch betätigbare Entriegelungseinrichtung entriegelbar ist. Der Fahrzeugsitz 1 ist ferner mittels eines, aus einer sitzfesten Oberschiene und karosseriefesten Unterschiene bestehenden, Sitzschienenpaares 19 an dem Fahrzeugboden verbunden und in Längsrichtung x verschiebbar.

Ferner kann der Darstellung von Fig. 1b in gemeinsamer Betrachtung mit Fig. 1a im Detail entnommen werden, dass das Antriebssystem 2 für eine Neigungseinstellung einer zwischen einer zur Fahrgastbeförderung geeigneten Gebrauchsstellung und einer gegenüber der Gebrauchsstellung vorgeschwenkten Nichtgebrauchsstellung klappbaren Rückenlehne 10 vorgesehen ist. Die Rückenlehne 10 ist beidseitig über einen Beschlag 12 an einem Unterbau 11 des Fahrzeugsitzes 1 gehalten. Bei wenigstens einem der beiden Beschläge 12 handelt es sich um einen kontinuierlich verriegelbaren Beschlag, wie dieser beispielsweise aus der DE 10 2012 012 847 B3 bekannt ist, wohingegen der entsprechend andere Beschlag 12 auch als ein verriegelungsfreies Drehlager ausgestaltet sein kann. Bevorzugt ist jedoch beidseitig je ein verriegelbarer kontinuierlicher Beschlag 12 vorgesehen. Ferner ist lehnenseitig ein von einem Antriebsmotor 20 antreibbares Abtriebsritzel 24 vorgesehen, wobei das Abtriebsritzel 24 mit einem drehfest am Unterbau 11 angeordneten Zahnsegment 18 zusammenwirkt. Das Abtriebsritzel 24 ist mittels einer Kupplung 22 von dem Antriebsmotor 20 entkoppelbar. Die Schwenkbewegung zur Neigungseinstellung der Rückenlehne 10 ist mittels des Antriebsmotors 20 durchführbar, während die Rückenlehne 10 im Beschlag 12 entriegelt, bzw. freigestellt ist.

Ferner ist in den Figuren 1a und 1b gezeigt, dass die Neigungseinstellung in dem Beschlag 12 fixierbar ist, wobei das Antriebssystem 2 eine Entriegelungseinrichtung 15 aufweist, mittels welcher der Beschlag 12 der Rückenlehne 10 betätigbar, insbesondere verriegelbar und/oder entriegelbar, ist. Die Entriegelungseinrichtung 15 ist bevorzugt elektrisch betätigbar und/oder steuerbar.

Eine zwischen der Rückenlehne 10 und dem Unterbau 11 wirkende Kompensationsfeder 14, mittels welcher die Rückenlehne 10 in Richtung einer Nichtgebrauchsstellung vorgespannt ist, kann der Darstellung von Fig. 1b ebenfalls entnommen werden.

Die Rückenlehne 10 ist gegenüber dem Unterbau 11 beidseitig mit je einem Beschlag 12, bevorzugt einem kontinuierlich verriegelbaren Beschlag verbunden. Hierbei ist wenigstens an einer Seite ein derartiger verriegelbarer Beschlag 12 vorgesehen, wohingegen der Beschlag 12 der gegenüberliegenden Seite als einfaches Drehlager ausgestaltet sein kann. Im Falle von zwei verriegelbaren Beschlägen 12, können diese, wie dargestellt, über eine Übertragungsstange 17 miteinander verbunden sein. Eine gegebenenfalls vorgesehene Entriegelungseinrichtung 15 zum Betätigen einer Lehnenverriegelung ist dazu eingerichtet, über einen Bowdenzug 16 auf einen Entriegelungshebel 13 zu wirken, der wiederum den jeweiligen verriegelbaren Beschlag 12 entriegelt, so dass die Rückenlehne 10 gegenüber dem Unterbau 11 freigestellt, oder anders ausgedrückt frei drehbar ist. Nach der Deaktivierung der Entriegelungseinrichtung 15 nimmt der Beschlag 12 federgetrieben wieder seinen verriegelten Zustand ein.

Die Übertragungsstange 17 stellt eine Verbindung zwischen den beiden rechts und links angeordneten Beschlägen 12 dar. Damit sind beide Beschläge 12 verbunden und werden gleichzeitig geöffnet bzw. geschlossen wenn die Entriegelungseinrichtung 15 betätigt wird. Ist es beispielsweise aufgrund des zur Verfügung stehenden Bauraumes in der Lehnenstruktur nicht möglich oder aber auch nicht erforderlich eine Übertragungsstange 17 einzusetzen, kann auf diese ebenso verzichtet werden. Als Alternative zu der Übertragungsstange 17 ist es bevorzugt, dass die Entriegelungseinrichtung 15 beide Beschläge 12 über jeweils einen Bowdenzug 16 ansteuert. Ebenso ist es möglich den Entriegelungshebel 13 an der Übertragungsstange 17 anzuordnen, über welche der Entriegelungshebel 13 in diesem Fall mit dem oder den Beschlägen 12 in Verbindung steht.

Über den Bowdenzug 16 wirkt die Entriegelungseinrichtung 15 auf einen entsprechenden Entriegelungshebel 13, welcher mit einem Beschlag 12 verbunden ist und setzt die Bewegung der Entriegelungseinrichtung 15, die über den Bowdenzug 16 auf den Entriegelungshebel 13 übertragen wird, in eine Drehbewegung um, mittels welcher letztlich der Beschlag 12 geöffnet, bzw. entriegelt, wird.

Der Antriebsmotor 20 des Antriebssystems 2 ist bevorzugt ein elektrisch betriebener Motor, abermals bevorzugt ein in seiner Drehzahl regelbarer Motor, welcher abtriebsseitig mit einem Getriebe 21 verbunden ist. Diese beiden Komponenten, der Antriebsmotor 20 und das Getriebe 21, sind drehfest mit der Rückenlehne 10 verbunden, bzw. an einer Struktur der Rückenlehne 10 angeordnet. Ein mit dem Getriebeausgang verbindbares Abtriebsritzel 24 wirkt mit einem unterbauseitigen Zahnsegment 18 zusammen, welches drehfest mit dem Unterbau 11 verbunden ist. Indem das Abtriebsritzel 24 entlang des Verlaufs des Zahnsegments 18 geführt wird, kann sich die Rückenlehne 10 gegenüber dem Unterbau 11 verstellen, wenn der Antriebsmotor 20 das Abtriebsritzel 24 über das Getriebe 21 antreibt. Das Abtriebsritzel 24 ist mit dem Zahnsegment 18 permanent in Eingriff.

Eine Kompensationsfeder 14 kann insbesondere wirkidentisch zu bereits bekannten Konzepten ausgestaltet sein. Sie stellt sicher, dass die Rückenlehne 10 zum Bereitstellen eines ebenen Ladebodens zeitnah nach Betätigung der entsprechenden Funktion, das bedeutet in möglichst kurzer Zeit, in die gewünschte Lage bewegt wird.

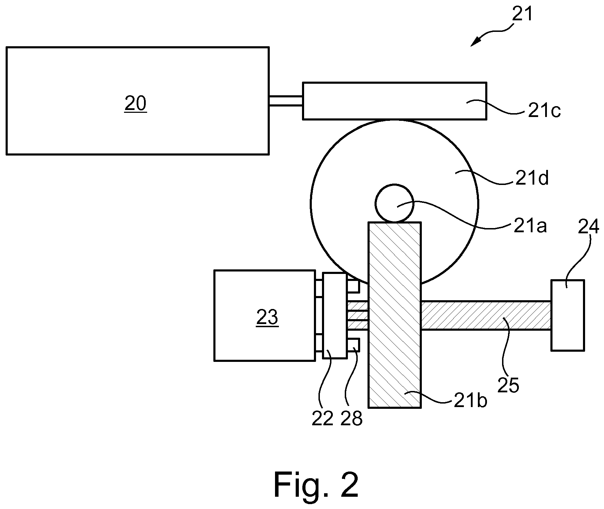

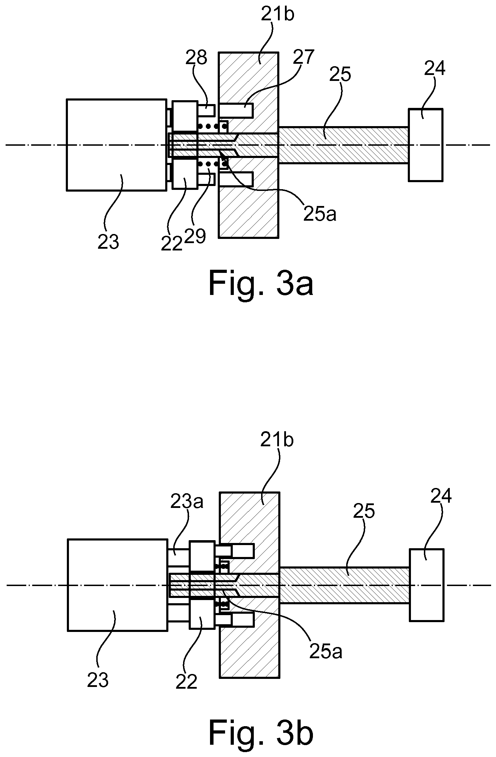

Des Weiteren stellt die Kompensationsfeder 14 sicher, dass nach Abschluss eines Einstellvorgangs der verriegelbare Beschlag 12 wieder sicher verriegelt ist.
Der Darstellung von Fig. 2 sowie auch der Figuren 3a und 3b ist eine schematische Darstellung einer möglichen Ausgestaltung des Antriebssystems 2 entnehmbar. Im Detail zeigen die Figuren 3a und 3b das zwischen dem Antriebsmotor 20 und dem Abtriebsritzel 24 angeordnete Getriebe 21 einmal in einem geöffneten Zustand der Kupplung 22 (Fig. 3a) und einmal in einem geschlossenen Zustand der Kupplung 22 (Fig. 3b).
In Fig. 2 ist eine Ausführungsform des Antriebssystems 2, insbesondere des Antriebsmotors 20 und des Getriebes 21, dargestellt. Das Getriebe 21 besteht jedoch nicht zwingend aus einem mehrstufigen Schneckengetriebe mit einer Getriebeschnecke 21a und einem Getrieberad 21b die miteinander in Eingriff stehen und eine erste Getriebestufe bilden und mit einer weiteren Getriebeschnecke 21c und einem weiteren Getrieberad 21d die miteinander in Eingriff stehen und eine weitere Getriebestufe bilden. Ein einstufiges, lediglich eine erste Getriebestufe aufweisendes Getriebe 21 ist ebenso denkbar. Die Kraft wird vom Antriebsmotor 20 erzeugt und über die Antriebswelle des Antriebsmotors 20 auf die Getriebeschnecke 21c der weiteren Getriebestufe des Getriebes 21 übertragen. In der weiteren Getriebestufe erfolgt eine Untersetzung der Eingangsdrehzahl. Über das Schneckenrad 21d der weiteren Getriebestufe wird die Getriebeschnecke 21a der ersten Getriebestufe angetrieben, die wiederrum den Antrieb des Schneckenrades 21b der ersten Getriebestufe darstellt. In der ersten Getriebestufe kann beispielsweise eine weitere Anpassung der Drehzahl bis zur Ausgangsdrehzahl am Abtriebsritzel 24 erfolgen. Die Kraftübertragung auf das Abtriebsritzel 24 erfolgt bei eingekuppelter Kupplung 22 durch die Abtriebswelle 25. Das Schneckenrad 21b ist auf der Abtriebswelle 25 drehbar gelagert. An dem dem Abtriebsritzel 24 abgewandten Ende der Abtriebswelle 25 ist ein konturierter Abschnitt 25a der Abtriebswelle 25 angeordnet, auf dem eine Kupplung 22 angeordnet ist. Die Kupplung 22 ist hierbei bevorzugt mittels einer mit dem konturierten Abschnitt 25a der Abtriebswelle 25 komplementär ausgebildeten Öffnung in Umfangsrichtung der Rotationsachse 26 der Abtriebswelle 25 drehfest mit der Abtriebswelle 25 verbunden und in axialer Richtung der Rotationsachse 26 der Abtriebswelle 25 entlang des konturierten Abschnitts 25a der Abtriebswelle 25 verschiebbar.

Drehfest im Sinne der Erfindung bedeutet allgemein, dass über die Konturierung ein Lastmoment in beide Drehrichtungen übertragen werden kann. Diese drehfeste Verbindung zwischen der Kupplung 22 und der Abtriebswelle 25 bleibt in dieser Ausführungsform über den gesamten axialen Verstellweg entlang des konturierten Abschnitts 25a erhalten. Die Konturierung kann hierbei beispielsweise eine Verzahnung oder eine Nut-Feder-Verbindung aufweisen, welche eine axiale Verschiebbarkeit und tangentiale Kraftübertragung ermöglicht. Ferner weist die Kupplung 22 ein oder mehrere Eingriffsmittel 28 auf, welche entsprechenden Ausnehmungen 27 im Schneckenrad 21b gegenüber stehen und mit den Ausnehmungen 27 in Eingriff bringbar sind. Sind die Eingriffsmittel 28 mit den Ausnehmungen 27 in Eingriff, so wird eine Drehung des Schneckenrades 21b mittels der Kupplung 22 aus die Abtriebswelle 25 übertragen.

Am stirnseitigen Ende des verzahnten Abschnitts 25a der Abtriebswelle 25 ist ein Aktuator 23 angeordnet, welcher mittels vorgesehener Kolben 23a auf die Kupplung 22 wirkt, um diese einzukuppeln oder auszukuppeln.

In der Darstellung von Fig. 3a ist das Getriebe 21 im Detail gezeigt. Hierbei ist die Kupplung 22 im ausgekuppelten, bzw. offenen Zustand dargestellt. Dies entspricht auch dem Zustand, welcher bei deaktiviertem Antriebssystem 2 eingenommen ist. In diesem Zustand ist das Abtriebsritzel 24, das auf Zahnsegment 18 abläuft, nicht durch den Antriebsmotor 20 und das Getriebe 21 blockiert. Das Abtriebsritzel 24 kann bei einer Bewegung der Rückenlehne 10 frei drehen und seiner Bewegung entlang des Zahnsegments 18 kann nahezu widerstandsfrei erfolgen. Dies ermöglicht ein manuelles Einstellen der Neigung der Rückenlehne 10 durch den Benutzer.

In der Darstellung von Fig. 3b ist das Getriebe 21 in eingekuppeltem, bzw. geschlossenem Zustand dargestellt. Der Aktuator 23, der dem Getriebe 21 zugeordnet ist verschiebt die Kupplung 22 axial entlang des konturierten Abschnitts 25a auf der Abtriebswelle 25 in Richtung des Schneckenrades 21b, bis die Eingriffsmittel 28 der Kupplung 22 mit den Ausnehmungen 27 des Schneckenrades 21b in Eingriff stehen. Hiermit ist das Schneckenrad 21b mit der Abtriebswelle 25 drehfest verbunden und der Antriebsmotor 20 kann die Rückenlehne 10 nach dem Wunsch des Benutzers verstellen. Nachdem das Antriebssystem 2 wieder deaktiviert wurde, drückt die zwischen Schneckenrad 21b und Kupplung 22 angeordnete Gegendruckfeder 29 die Kupplung 22 wieder aus dem Eingriff mit dem Schneckenrad 21b und das Antriebssystem befindet sich wieder in dem ausgekuppelten Zustand gemäß der Darstellung von Fig. 3a.

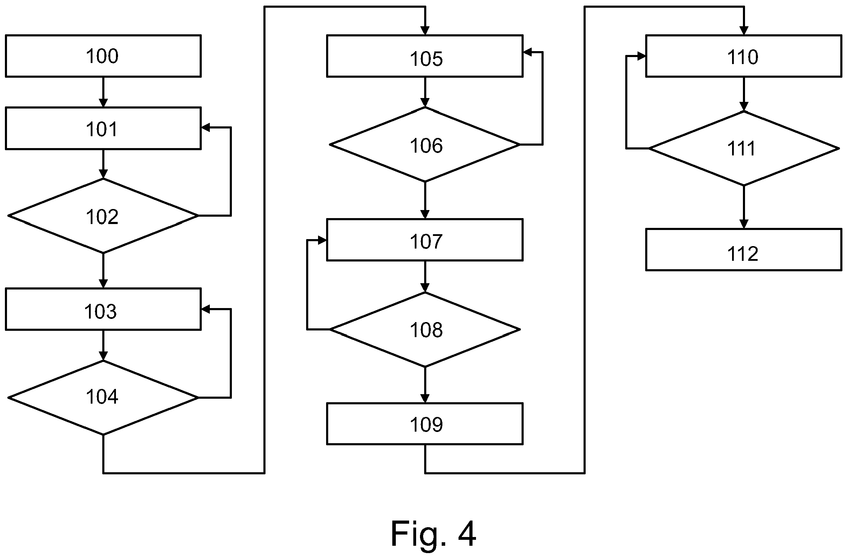

Die Steuerung des Antriebsmotors muss über eine Steuereinrichtung erfolgen, so dass der Antriebsmotor 20 erst anfängt sich zu drehen, wenn der Aktuator 23 die Kupplung 22 eingekuppelt hat. Ist das Antriebssystem 2 in der in Fig. 3a dargestellten Ausgangsstellung, wobei die Kupplung 22 ausgekuppelt ist, fällt die Rückenlehne 10 nach einer Entriegelung des Beschlages 12 in die Nichtgebrauchsstellung, in welcher die Rückenlehne 10 die Funktion eines ebenen Ladebodens bereitstellen soll. Hiermit ist ein schnelles Umklappen sichergestellt. Dies ist ebenfalls in der ersten Betriebsart des vorgeschlagenen Verfahrens zum Betrieb des Antriebssystems 2 realisiert und wird nachfolgend mit Verweis auf Fig. 4 näher beschrieben.

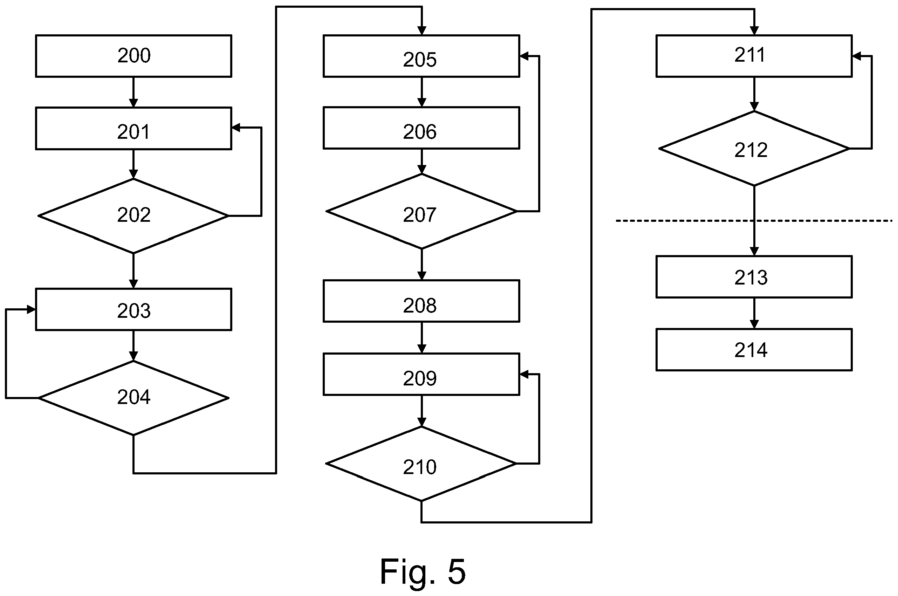

Für ein Aufrichten der Rückenlehne 10 wird die Kupplung 22 eingekuppelt und der Antriebsmotor 20 kann über das Getriebe 21 die Rückenlehne 10 wieder aufrichten, bzw. in Richtung einer hintersten Gebrauchsstellung bewegen. Bevor der Antriebsmotor 20 die Rückenlehne 10 verstellt, wird mittels des Aktuators 23 die Kupplung 22 eingekuppelt. Das Aufrichten der Rückenlehne 10 ist bevorzugt in unterschiedlichen Geschwindigkeiten realisierbar, insbesondere in einer schnelleren Geschwindigkeit zur Aufrichtung aus der Nichtgebrauchsstellung zur Bereitstellung einer zur Fahrgastbeförderung geeigneten Grundfunktion der Fahrzeugsitzes 1, als auch in einer langsameren vom Benutzer kontrollierbareren Geschwindigkeit mit einer Funktionsweise für eine Komforteinstellung. Dies entspricht der zweiten Betriebsart des vorgeschlagenen Verfahrens zur Bedienung eines Antriebssystems 2, welches nachfolgend mit Bezug auf Fig. 5 näher beschrieben ist.

Nach einer Deaktivierung des Antriebssystems 2 stoppt zunächst der Antriebsmotor 20, der Beschlag 12 wird verriegelt und anschließend die Kupplung 22 außer Eingriff gebracht. Der Zustand des Antriebssystems 2 entspricht nunmehr dem einer mechanischen Lehneneinstellung, so dass eine Verriegelung des Beschlages 12 mittels der Kompensationsfeder 14 durch eine geringfügige Bewegung der Rückenlehne 10 in einen vollständigen Eingriff der Verriegelung geführt wird und der Beschlag 12 somit crashsicher verriegelt ist.

Das vorgeschlagene Verfahren ist in den Figuren 4, 5, 6 anhand von Ablaufdiagrammen dargestellt, wobei jede der Figuren 4, 5, 6 eine der drei verschiedenen Betriebsarten des Verfahrens beschreibt.

Das in Fig. 4 dargestellte Ablaufdiagramm entspricht der ersten Betriebsart des Verfahrens zum Betrieb eines Antriebssystems 2. Hierbei ist es vorgesehen, dass der Antriebsmotor 20 entkoppelt ist und die Rückenlehne 10 von einer Kompensationsfeder 14 angetrieben in die Nichtgebrauchsstellung bewegt wird.

Zunächst bedarf es einer Aktivierung 100 der ersten Betriebsart durch den Benutzer. Anschließen kann in Schritt 101 eine Aktivierung einer automatisierten Längsverstellung des Fahrzeugsitzes 1 erfolgen, um den Fahrzeugsitz beispielsweise mittels eines in dem Sitzschienenpaar 19 angeordneten Lineareinstellers gemäß DE 10 2010 032 507 A1 in Längsrichtung x derart zu positionieren, dass eine ungehinderte Bewegung der Rückenlehne 10 in Nichtgebrauchsstellung erfolgen kann. Nach einer Überprüfung in Schritt 102, ob eine vorgesehene Endposition der Längeneinstellung des Fahrzeugsitzes 1 erreicht wurde, folgt eine Entriegelung 103 des Fahrzeugsitzes 1 am Fahrzeugboden. Dies wird im folgenden Schritt 104 überprüft. Gemäß Schritt 105 wird eine Entriegelungseinrichtung 15 betätigt, um den Beschlag 12 des Fahrzeugsitzes 1 zu entriegeln. Nach einer Überprüfung 106 des Verriegelungszustandes des Beschlages 12 erfolgt in Schritt 107 eine Bewegung der Rückenlehne 10 in Richtung der Nichtgebrauchsstellung. Zur Überprüfung 108 kann es beispielsweise vorgesehen sein, die Winkelstellung der Rückenlehne 10 mittels eines Sensors zu erfassen. Meldet Schritt 109, dass die maximal vorgeschwenkte Nichtgebrauchsstellung der Rückenlehne 10 erreicht ist, wird in Schritt 110 die Entriegelungseinrichtung 15 betätigt, um den Beschlag 12 zu verriegeln und die Rückenlehne 10 in der aktuellen Position zu fixieren. Nach einem Erfassen 111 der sicheren Verriegelung des Beschlages 12 überführt Schritt 112 das Antriebssystem 2 in den Endzustand der ersten Betriebsart, welcher den Ausgangszustand entspricht.

Das in Fig. 5 dargestellte Ablaufdiagramm entspricht der zweiten Betriebsart des Verfahrens zum Betrieb eines Antriebssystems 2. Hierbei ist es vorgesehen, dass der verbundene Antriebsmotor 20 die Rückenlehne 10, insbesondere entgegen einer von der Kompensationsfeder 14 erzeugten Spannkraft, in Richtung der hintersten Gebrauchsstellung bewegt.

Zunächst bedarf es einer Aktivierung 200 der zweiten Betriebsart durch den Benutzer. Anschließend kann in Schritt 201 der Beschlag 12 durch Betätigung der Entriegelungsvorrichtung 15 entriegelt werden. Nach einer Überprüfung 202 der zuvor betätigten Entriegelung erfolgt in Schritt 203 eine Betätigung der Kupplung 22 durch den Aktuator 23, wodurch die Kupplung 22 eingekuppelt wird. Nachdem eine Verbindung der Kupplung 22 mit dem Getrieberad 21b in Schritt 204 festgestellt wurde, wird in Schritt 205 der Antriebsmotor 20 betätigt, um die Rückenlehne 10 in Richtung der hintersten Gebrauchsstellung zu bewegen. Hierbei wird in Schritt 206 der Fahrzeugsitz 1 gegebenenfalls automatisch am Fahrzeugboden verriegelt. Nach einer Überprüfung in Schritt 207, ob die Gebrauchsstellung erreicht wurde, folgt in Schritt 208 ein Abschalten des Antriebsmotors 20. Nachfolgend wird in Schritt 209 der Beschlag 12 verriegelt, was entsprechend in Schritt 210 erfasst und überprüft wird. Sofern eine Verriegelung des Beschlages 12 festgestellt werden konnte, wird in Schritt 211 ein Auskuppeln der Kupplung 22 durch den Aktuator 23 durchgeführt. Schritt 212 überprüft, ob die Kupplung 22 geöffnet ist. Die dargestellte gestrichelte Linie zeigt einen Übergang in den Standardzustand des Antriebssystems 2 dar. Hiernach verhält sich die Neigungseinstellung der Rückenlehne 10 wie ein bekanntes manuelles System zur Neigungseinstellung. In Schritt 213 erfolgt ein Erreichen eines maximalen Eingriffs der Verriegelung des Beschlages 12 durch die Kompensationsfeder 14. Abschließend wird das Antriebssystem 2 in den Endzustand 214 der zweiten Betriebsart überführt, welcher ebenfalls dem Ausgangszustand entspricht.

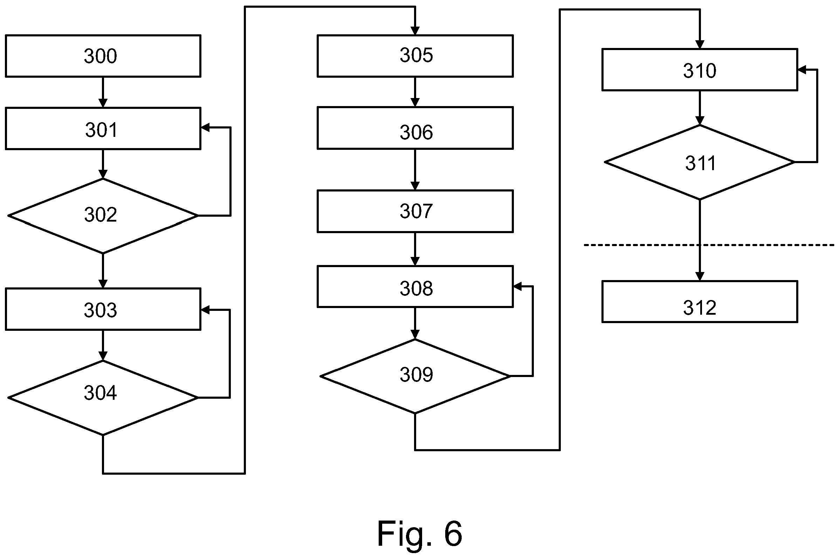

Das in Fig. 6 dargestellte Ablaufdiagramm entspricht der dritten Betriebsart des Verfahrens zum Betrieb eines Antriebssystems 2. Hierbei ist es vorgesehen, dass der verbundene Antriebsmotor 20 die Rückenlehne 10, durch kontrolliertes Nachgeben der von der Kompensationsfeder 14 erzeugten Spannkraft, in Richtung der Nichtgebrauchsstellung bewegt.

Zunächst bedarf es einer Aktivierung 300 der dritten Betriebsart durch den Benutzer. Dann wird durch eine Betätigung 301 des Aktuators 23 die Kupplung 22 eingekuppelt. Prozessschritt 302 überprüft beispielsweise mittels eines Sensors, ob die Kupplung 22 geschlossen ist und verweist so lange auf die Betätigung 301 zurück, bis die Kupplung 22 geschlossen ist. Nach dem Einkuppeln der Kupplung 22 wird, gemäß Schritt 303, eine Entriegelungseinrichtung 15 aktiviert, welche den Beschlag 12 entriegelt. Eine Überprüfung 304 wird durchgeführt, bis und ob der Beschlag 12 entriegelt ist. Hierzu können weitere Sensoren vorgesehen sein, welcher mit der Steuerungseinheit verbunden sind.

In Prozessschritt 305 wird der Antriebsmotor 20 betätigt, solange der Benutzer beispielsweise durch Festhalten eines Schalters ein entsprechendes Steuersignal generiert. Wenn die gewünschte Neigung der Rückenlehne 10 erreicht ist, deaktiviert der Benutzer in 306 das Antriebssystem 2 und im nachfolgenden Schritt 307 wird der Antriebsmotor 2 angehalten. In Schritt 308 wird die Entriegelungseinrichtung 15 betätigt um den Beschlag 12 zu verriegeln. Der Verriegelungszustand des Beschlages 12 wird in Schritt 309 mittels eines Sensors erfasst und nach erfolgter Verriegelung des Beschlages 12 eine Betätigung 310 des Aktuators 23 zum Entkuppeln der Kupplung 22 ausgelöst. Schritt 311 überprüft, ob die Kupplung 22 geöffnet wurde und überführt anschließend in den Endzustand 312 der dritten Betriebsart.

Nach jedem Durchlaufen einer Betriebsart befindet sich das Antriebssystem 2 wieder im Ausganszustand und ist bereit für einen weiteren Durchlauf einer beliebigen Betriebsart oder ein manuelles Einstellen der Neigung der Rückenlehne 10 durch den Benutzer.
Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.
Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus den Schutzansprüchen. In den Schutzansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Schutzansprüchen genannten Einheiten bzw. Einrichtungen ausführen.

### Bezugszeichenliste

- 1: Fahrzeugsitz
- 10: Rückenlehne
- 11: Unterbau
- 12: Beschlag
- 13: Entriegelungshebel
- 14: Kompensationsfeder
- 15: Entriegelungseinrichtung
- 16: Bowdenzug
- 17: Übertragungsstange
- 18: Zahnsegment
- 19: Sitzschienenpaar
- 2: Antriebssystem
- 20: Antriebsmotor
- 21: Getriebe
- 21a: Getriebeschnecke
- 21b: Getrieberad
- 21c: weitere Getriebeschnecke
- 21d: weiteres Getrieberad
- 22: Kupplung
- 23: Aktuator
- 23a: Kolben
- 24: Abtriebsritzel
- 25: Abtriebswelle
- 25a: verzahnter Abschnitt der Abtriebswelle 25
- 26: Rotationsachse der Abtriebswelle 25
- 27: Ausnehmung
- 28: Eingriffsmittel
- 29: Gegendruckfeder
- 100-112: Prozessschritte der ersten Betriebsart
- 200-214: Prozessschritte der zweiten Betriebsart
- 300-312: Prozessschritte der dritten Betriebsart

- x: Längsrichtung
- y: Querrichtung
- z: Vertikalrichtung

## Patentansprüche

1. Fahrzeugsitz (1) mit einer Rückenlehne (10) und einem Antriebssystem (2) für eine Neigungseinstellung einer zwischen einer zur Fahrgastbeförderung geeigneten Gebrauchsstellung und einer gegenüber der Gebrauchsstellung vorgeschwenkten Nichtgebrauchsstellung klappbaren Rückenlehne (10), wobei die Rückenlehne (10) über wenigstens einen Beschlag (12) an einem Unterbau (11) des Fahrzeugsitzes (1) gehalten ist, wobei lehnenseitig ein von einem Antriebsmotor (20) antreibbares Abtriebsritzel (24) vorgesehen ist, und das Abtriebsritzel (24) mit einem drehfest am Unterbau (11) angeordneten Zahnsegment (18) zusammenwirkt und mittels des Antriebsmotors (20) eine Schwenkbewegung der Rückenlehne (10) durchführbar ist, während der Beschlag (12) entriegelt ist,
**dadurch gekennzeichnet,**
**dass** das Abtriebsritzel (24) mittels einer Kupplung (22) von dem Antriebsmotor (20) entkoppelbar ist, und
**dass** eine zwischen der Rückenlehne (10) und dem Unterbau (11) wirkende Kompensationsfeder (14) vorgesehen ist, mittels welcher die Rückenlehne (10) in Richtung der Nichtgebrauchsstellung vorgespannt ist.

2. Fahrzeugsitz (1) gemäß Anspruch 1, wobei die Neigungseinstellung mittels des Beschlags (12) fixierbar ist.

3. Fahrzeugsitz (1) gemäß einem der Ansprüche 1 oder 2, wobei zwischen dem Antriebsmotor (20) und dem Abtriebsritzel (24) ein Getriebe (21) angeordnet ist.

4. Fahrzeugsitz (1) gemäß einem der Ansprüche 1 bis 3, wobei das Antriebssystem (2) einen Aktuator (23) aufweist, mittels welchem die Kupplung (22) betätigbar ist.

5. Fahrzeugsitz (1) gemäß einem der Ansprüche 1 bis 4, wobei die Kupplung (22) ein oder mehrere Eingriffsmittel (28) aufweist, welche entsprechenden Ausnehmungen (27) im Schneckenrad (21b) gegenüberstehend angeordnet sind und mit den Ausnehmungen (27) in Eingriff bringbar sind.

6. Fahrzeugsitz (1) gemäß einem der Ansprüche 1 bis 5 wobei an dem Abtriebsritzel (24) abgewandten Ende der Abtriebswelle (25) ein konturierter Abschnitt (25a) der Abtriebswelle (25) vorgesehen ist, auf welchem die Kupplung (22) angeordnet ist.

7. Fahrzeugsitz (1) gemäß Anspruch 6, wobei die Kupplung (22) mittels einer mit dem konturierten Abschnitt (25a) der Abtriebswelle (25) komplementär ausgebildeten Öffnung in Umfangsrichtung der Rotationsachse (26) der Abtriebswelle (25) drehfest mit der Abtriebswelle (25) verbunden und in axialer Richtung der Rotationsachse (26) der Abtriebswelle (25) entlang des konturierten Abschnitts (25a) der Abtriebswelle (25) verschiebbar ist.

8. Fahrzeugsitz (1) gemäß einem der Ansprüche 1 bis 7, wobei das Antriebssystem (2) eine Entriegelungseinrichtung (15) aufweist, mittels welcher der Beschlag (12) der Rückenlehne (10) betätigbar ist.

9. Fahrzeugsitz (1) gemäß Anspruch 8, wobei der Beschlag (12) der Rückenlehne (10) verriegelbar und/oder entriegelbar ist.

10. Fahrzeugsitz (1) gemäß einem der Ansprüche 8 oder 9, wobei die Entriegelungseinrichtung (15) elektrisch betätigbar und/oder steuerbar ist.

11. Fahrzeugsitz (1) gemäß einem der Ansprüche 1 bis 10, wobei der Fahrzeugsitz (1) durch ein Schloss am Fahrzeugboden verriegelbar ist.

12. Fahrzeugsitz (1) gemäß einem der Ansprüche 1 bis 11, wobei eine Steuerungseinrichtung vorgesehen ist, welche den Antriebsmotor (20) und/oder einen Aktuator (23) und/oder eine Entriegelungseinrichtung (15) steuert.

13. Verfahren zum Betrieb eines Antriebssystems (2) für eine Neigungseinstellung einer zwischen einer zur Fahrgastbeförderung geeigneten Gebrauchsstellung und einer gegenüber der Gebrauchsstellung vorgeschwenkten Nichtgebrauchsstellung klappbaren Rückenlehne (10) des Fahrzeugsitzes (1) gemäß einem der vorgehenden Ansprüche, **gekennzeichnet durch**:
- eine erste Betriebsart, in welcher der Antriebsmotor (20) von der Rückenlehne (10) entkoppelt ist und die Rückenlehne (10) von einer Kompensationsfeder (14) angetrieben in die Nichtgebrauchsstellung bewegt wird;
- eine zweite Betriebsart, in welcher der mit der Rückenlehne (10) gekoppelte Antriebsmotor (20) die Rückenlehne (10), entgegen einer von der Kompensationsfeder (14) erzeugten Spannkraft, in eine Gebrauchsstellung bewegt;
- eine dritte Betriebsart, in welcher der mit der Rückenlehne (10) gekoppelte Antriebsmotor (20) die Rückenlehne (10), **durch** kontrolliertes Nachgeben der von der Kompensationsfeder (14) erzeugten Spannkraft, in Richtung der Nichtgebrauchsstellung bewegt.

14. Verfahren gemäß Anspruch 13, wobei das Aufrichten der Rückenlehne (10) in unterschiedlichen Geschwindigkeiten realisierbar ist.

## Claims

1. Vehicle seat (1) comprising a backrest (10) and a drive system (2) for a tilt adjustment of a backrest (10) which is foldable between a use position suitable for conveying a vehicle passenger and a non-use position which is pivoted forward with respect to the use position, wherein the backrest (10) is held on a subframe (11) of the vehicle seat (1) by at least one fitting (12), wherein an output pinion (24) which is able to be driven by a drive motor (20) is provided on the backrest side and the output pinion (24) cooperates with a toothed segment (18) arranged fixedly in terms of rotation on the subframe (11) and a pivoting movement of the backrest (10) is able to be carried out by means of the drive motor (20) while the fitting (12) is unlocked, **characterized in that** the output pinion (24) is able to be uncoupled from the drive motor (20) by means of a clutch (22) and **in that** a compensation spring (14) acting between the backrest (10) and the subframe (11) is provided, by means of which compensation spring the backrest (10) is pretensioned in the direction of the non-use position.

2. Vehicle seat (1) according to Claim 1, wherein the tilt adjustment is able to be fixed by means of the fitting (12).

3. Vehicle seat 1 according to one of Claims 1 or 2, wherein a gear unit (21) is arranged between the drive motor (20) and the output pinion (24).

4. Vehicle seat (1) according to one of Claims 1 to 3, wherein the drive system (2) comprises an actuator (23), the clutch (22) being able to be actuated thereby.

5. Vehicle seat (1) according to one of Claims 1 to 4, wherein the clutch (22) comprises one or more engagement means (28) which are arranged opposite corresponding recesses (27) in the worm wheel (21b) and which are able to be brought into engagement with the recesses (27).

6. Vehicle seat (1) according to one of Claims 1 to 5, wherein a contoured portion (25a) of the output shaft (25) is provided at the end of the output shaft (25) remote from the output pinion (24), the clutch being arranged (22) thereon.

7. Vehicle seat (1) according to Claim 6, wherein the clutch (22) is connected fixedly in terms of rotation to the output shaft (25) by means of an opening in the circumferential direction of the rotational axis (26) of the output shaft (25), said opening being configured in a complementary manner to the contoured portion (25a) of the output shaft (25), and said clutch is able to be displaced along the contoured portion (25a) of the output shaft (25) in the axial direction of the rotational axis (26) of the output shaft (25).

8. Vehicle seat (1) according to one of Claims 1 to 7, wherein the drive system (2) comprises an unlocking device (15), the fitting (12) of the backrest (10) being able to be actuated thereby.

9. Vehicle seat (1) according to Claim 8, wherein the fitting (12) of the backrest (10) is able to be locked and/or unlocked.

10. Vehicle seat (1) according to one of Claims 8 or 9, wherein the unlocking device (15) is able to be electrically actuated and/or controlled.

11. Vehicle seat (1) according to one of Claims 1 to 10, wherein the vehicle seat (1) is able to be locked by a lock to the vehicle floor.

12. Vehicle seat (1) according to one of Claims 1 to 11, wherein a control device which controls the drive motor (20) and/or an actuator (23) and/or an unlocking device (15) is provided.

13. Method for operating a drive system (2) for a tilt adjustment of a backrest (10) of the vehicle seat (1) according to one of the preceding claims, which backrest is foldable between a use position suitable for conveying a vehicle passenger and a non-use position which is pivoted forward with respect to the use position, **characterized by**:
- a first operating mode in which the drive motor (20) is uncoupled from the backrest (10) and the backrest (10) is moved into the non-use position, driven by a compensation spring (14);
- a second operating mode in which the drive motor (20) coupled to the backrest (10) moves the backrest (10) into a use position, counter to a tensioning force produced by the compensation spring (14);
- a third operating mode in which the drive motor (20) coupled to the backrest (10) moves the backrest (10) in the direction of the non-use position by controlled release of the tensioning force produced by the compensation spring (14).

14. Method according to Claim 13, wherein the backrest (10) is able to be set upright at different speeds.

## Revendications

1. Siège de véhicule (1) avec un dossier (10) et un système d'entraînement (2) pour un réglage d'inclinaison d'un dossier (10) rabattable entre une position d'utilisation convenant pour le transport de passager et une position de non-utilisation rabattue vers l'avant par rapport à la position d'utilisation, dans lequel le dossier (10) est maintenu sur une infrastructure (11) du siège de véhicule (1) par au moins une ferrure (12), dans lequel il est prévu du côté du dossier un pignon de sortie (24) pouvant être entraîné par un moteur d'entraînement (20), et le pignon de sortie (24) coopère avec un segment denté (18) disposé sans rotation sur l'infrastructure (11) et un mouvement pivotant du dossier (10) peut être exécuté au moyen du moteur d'entraînement (20), pendant que la ferrure (12) est déverrouillée, **caractérisé en ce que** le pignon de sortie (24) peut être découplé du moteur d'entraînement (20) au moyen d'un embrayage (22) et **en ce qu'**il est prévu un ressort de compensation (14) agissant entre le dossier (10) et l'infrastructure (11), au moyen duquel le dossier (10) est précontraint en direction de la position de non-utilisation.

2. Siège de véhicule (1) selon la revendication 1, dans lequel le réglage de l'inclinaison peut être fixé au moyen de la ferrure (12).

3. Siège de véhicule (1) selon une des revendications 1 ou 2, dans lequel une transmission (21) est disposée entre le moteur d'entraînement (20) et le pignon de sortie (24).

4. Siège de véhicule (1) selon l'une quelconque des revendications 1 à 3, dans lequel le système d'entraînement (2) présente un actionneur (23), au moyen duquel l'embrayage (22) peut être actionné.

5. Siège de véhicule (1) selon l'une quelconque des revendications 1 à 4, dans lequel l'embrayage (22) présente un ou plusieurs moyen(s) d'engagement (28), qui sont disposés en face d'évidements correspondants (27) dans la roue à vis sans fin (21b) et qui peuvent être amenés en engagement avec les évidements (27).

6. Siège de véhicule (1) selon l'une quelconque des revendications 1 à 5, dans lequel il est prévu sur l'extrémité de l'arbre de sortie (25) éloignée du pignon de sortie (24) une partie profilée (25a) de l'arbre de sortie (25), sur laquelle l'embrayage (22) est disposé.

7. Siège de véhicule (1) selon la revendication 6, dans lequel l'embrayage (22) est assemblé à l'arbre de sortie (25) de façon calée en rotation dans la direction périphérique de l'axe de rotation (26) de l'arbre de sortie (25) au moyen d'une ouverture complémentaire à la partie profilée (25a) de l'arbre de sortie (25) et est déplaçable en direction axiale de l'axe de rotation (26) de l'arbre de sortie (25) le long de la partie profilée (25a) de l'arbre de sortie (25).

8. Siège de véhicule (1) selon l'une quelconque des revendications 1 à 7, dans lequel le système d'entraînement (2) présente un dispositif de déverrouillage (15), au moyen duquel la ferrure (12) du dossier (10) peut être actionnée.

9. Siège de véhicule (1) selon la revendication 8, dans lequel la ferrure (12) du dossier (10) peut être verrouillée et/ou déverrouillée.

10. Siège de véhicule (1) selon une des revendications 8 ou 9, dans lequel le dispositif de déverrouillage (15) peut être actionné et/ou commandé électriquement.

11. Siège de véhicule (1) selon l'une quelconque des revendications 1 à 10, dans lequel le siège de véhicule (1) peut être verrouillé au plancher du véhicule au moyen d'une serrure.

12. Siège de véhicule (1) selon l'une quelconque des revendications 1 à 11, dans lequel il est prévu un dispositif de commande, qui commande le moteur d'entraînement (20) et/ou un actionneur (23) et/ou un dispositif de déverrouillage (15).

13. Procédé pour faire fonctionner un système d'entraînement (2) pour un réglage de l'inclinaison d'un dossier (10) du siège de véhicule (1) rabattable entre une position d'utilisation convenant pour le transport de passager et une position de non-utilisation rabattue vers l'avant par rapport à la position d'utilisation selon l'une quelconque des revendications précédentes, **caractérisé par**:
- un premier mode de fonctionnement, dans lequel le moteur d'entraînement (20) est découplé du dossier (10) et le dossier (10) entraîné par un ressort de compensation (14) est déplacé dans la position de non-utilisation;
- un deuxième mode de fonctionnement, dans lequel le moteur d'entraînement (20) couplé au dossier (10) déplace le dossier (10) dans une position d'utilisation, contre une force de tension produite par le ressort de compensation (14);
- un troisième mode de fonctionnement, dans lequel le moteur d'entraînement (20) couplé au dossier (10) déplace le dossier (10) en direction de la position de non-utilisation, par la diminution contrôlée de la force de tension produite par le ressort de compensation (14).

14. Procédé selon la revendication 13, dans lequel le redressement du dossier (10) peut être réalisé avec des vitesses différentes.
